Europäisches Patentamt

European Patent Office

Office européen des brevets

(11) Publication number: **0 306 972 B1**

# EUROPEAN PATENT SPECIFICATION

(45) Date of publication of patent specification: **03.06.92**  (51) Int. Cl.5: **C09K 5/00**

(21) Application number: **88114774.8**

(22) Date of filing: **09.09.88**

(54) **Glycol-free frost resistant cooling fluid.**

(30) Priority: **10.09.87 HU 402487**

(43) Date of publication of application:
**15.03.89 Bulletin  89/11**

(45) Publication of the grant of the patent:
**03.06.92 Bulletin  92/23**

(84) Designated Contracting States:
**AT BE CH DE FR GB LI SE**

(56) References cited:
**FR-A- 838 638**
**GB-A- 561 253**
**GB-A- 1 387 810**
**US-A- 4 081 256**

(73) Proprietor: **Eszakmagyarországi Vegyimüvek**

**H-3792 Sajobábony(HU)**

(72) Inventor: **Kardos, Peter**
**Bajcsy-Zselinskzky köz. 1. sz.**
**H-1065 Budapest(HU)**
Inventor: **Kalman, Tibor**
**Toth Lorincz u. 37**
**H-1126 Budapest(HU)**
Inventor: **Kerti, Jozsef**
**Szakasits A. u. 19**
**H-1119 Budapest(HU)**
Inventor: **Kerti, Eszter**
**Szakasits A. u. 19**
**H-1119 Budapest(HU)**

(74) Representative: **Hansen, Bernd, Dr.rer.nat. et al**
**Hoffmann, Eitle & Partner Patentanwälte Arabellastrasse 4 Postfach 81 04 20**
**W-8000 München 81(DE)**

Rank Xerox (UK) Business Services

**Description**

The subject of the invention is a glycol-free and otherwise also environment-friendly, long-life cooling fluid at increased frost resistance for cooling internal combustion engines, operating cooling towers of thermal power stations, industrial and household type refrigerators and deep-freezers, open and enclosed heat exchangers, solar collectors, doublers and autoclaves of the chemical industry providing equipment with protection against frost damage in case of freezing.

In the temperature range above the freezing point, the most generally applied cooling fluid is water. In addition to availability, the advantage of water is that its specific heat according to our current knowledge is the highest of all fluids, furthermore it is of low viscosity and, as a result of the mentioned properties, good heat conductivity. In addition to these important thermal characteristics, its moderated corrosive effect, which can be further reduced by the addition of inhibitors is another advantage.

However, the disadvantage of water is that it is not frost-resistant. Upon freezing its specific volume increases by 9 %, leading to the frost damage of the equipment.

The frost resistance of water can be significantly improved by the addition of electrolytes that are well dissolved even at low temperatures. This possibility is, however, very much limited by the fact that the use of acids and alkalies is not permissible for labour safety, environment protection and corrosion reasons. From a cryoscopic aspect - according to our current knowledge - calcium chloride has been proved to be the most advantageous salt, because by its addition even a temperature of about -50 °C can be attained, while the solution maintaines its liquid state, and only a slight increase in viscosity and a slight reduction in specific heat occur . A much more serious problem, however, is the corrosion activating effect of the chloride ions, mainly in concentrated solutions, because this effect - causing mostly a perforation corrosion - can not be satisfactorily reduced even by the use of the inhibitors known today. If other anions are chosen instead of the chloride, solubility problems occur. These problems may involve a low saturation concentration under all conditions (e.g. calcium sulphate) or a dramatic decrease of saturation concentration with decreasing temperature (e.g. sodium sulphate, potassium nitrate).

Hydrocarbons, alcohols and ketones of a low carbon atom number are very advantageous in respect to frost resistance, however, the low specific heat, volatility (low boiling point) as well as the risk of fire and explosion exclude their use, and all the more so, because certain members of this group of compounds (e.g. methanol) are also poisonous, consequently unsuitable from a labour safety aspect.

Due to their several advantages, in practice the aqueous ethylene-glycol solutions marketed under various names as heat transfer fluids have been accepted in a wide range as frost resistant cooling fluids. The advantage of these solutions is that glycol can be mixed with water without limitations, the risk of fire and explosion is moderate, the specific heat is about twice as high as that of the organic solvents mentioned, they are colourless, odourless and relatively frost resistant. The specific heat and the solidification point are the function of glycol-water ratio. The specific heat increases, but frost resistance decreases with the increase of water content. The lowest solidification point (-57 °C) is associated with the eutectic composition, and in this case the glycol content is 60 % by volume. A further advantage is that in the practically important compositions the glycol-water mixture does not freeze with a concomitant increase in volume, consequently equipment is not damaged by freezing.

Besides the already described advantages of the glycol-based frost resistant cooling fluids, however, there are also disadvantages which limit their wider use. Ethylene glycol is a serious poison and, since it can be easily confounded with ethyl alcohol, it has led repeatedly to the well-known, sometimes fatal poisoning cases. Due to the same reason it contaminates environment, and when it gets into live waters, for example when the cooling fluid is discarded carelessly or when it leaks due to a defect of the equipment it entails grave consequences. At the same time, the frost resistance can only be utilized partly, because for example the mixture of 1:1 volume ratio important for a practical aspect has a freezing point of -38 °C, but already at -31 °C it shows a non-thixotropic jelly consistence, and becomes unsuitable for pumping. According to experience the so-called fluidity limit of -31 °C cannot be reduced even by modifying the glycol-water ratio, and this also means that in heat transfer processes, where fluidity is a well-known precondition, the glycol-water mixture is practically unsuitable below -30 °C. And, the frost resistance, fluidity and even more the corrosive characteristics of the mixture are deteriorated in the course of time, due to the slow polymerization and acidic decomposition of glycol. Therefore, the mixture is to be replaced after a time, which represents a further technical-economic disadvantage.

Taking all these factors into consideration, when elaborating the new frost resistant cooling fluid, the invention was aimed at maintaining the well-known advantages of the glycol-based cooling mixtures, and eliminating their described disadvantages, also ensuring an arbitrary mixing ratio of the new fluid with the conventional glycol-based cooling medium. This latter requirement had to be imposed, because we had to consider the possibility of mixing due to mistake or due to reasons of stock management.

US-PS 4 081 256 describes a composition which can be used in a cold pack comprising urea, hydrated sodium acetate, potassium chloride and/or potassium nitrate, ammonium chloride and guar gum.

The present invention is directed to a partly or fully glycol-free multi-component frost resistant cooling fluid, comprising 3 to 6 parts by weight of water, 0.5 to 1.5 parts by weight of urea, at most 1.5 parts by weight of glycol, 1 to 2 parts by weight of sodium formate, and 1 to 2 parts by weight of sodium acetate as main components.

The invention comprises also a glycol-free multi-component frost resistant cooling fluid comprising 4 to 7 parts by weight of potassium acetate, 0.66 to 1.5 parts by weight of potassium formate and 3 to 9 parts by weight of water as main components.

It was found that in an aqueous medium alkali salts of certain anions, mainly acetates and formates in combination with each other and/or with water soluble organic compounds, e.g. formamide and/or urea containing an intensively hydrophilic substituent either with or without glycol result in such an extreme reduction in freezing point, which is not even approached by applying the individual components, dissolved in water separately. In fact, the resultant freezing point decrease, calculated on the basis of additivity in freezing point drops determined separately for each component, lags far behind the freezing point reduction actually achieved by the mixture established with the above mentioned components. This very significant extra effect is convincingly proven by the example of potassium acetate and potassium formate. In the concentrated aqueous solution of the former the freezing point that can be achieved is -38 °C and in the case of the latter it is -35 °C (i.e. compared to that of water, the freezing point decrease is the same). On the other hand if these two potassium compounds are "dissolved" in water in combination with each other, employing the compositions to be described later, a fluid composition is obtained at -70 °C or even at a lower temperature. Nevertheless, such an extreme frost resistance is very rarely required in practice. Due to this reason (if merely for economic considerations) it is advisable to dilute the liquid with water to such an extent that this fluid should remain frost resistant under the given climatic conditions with full safety. This approach is also justified by the fact that the specific heat and fluidity of the liquid increase on dilution in every case.

In connection with the fluids according to our invention, including the above-mentioned acetate and formate mixtures, the use of expressions like "dissolving" and "solution" is problematic from theoretical aspect because the structures of the fluids are much more similar to that of melts than to that of aqueous solutions.

Since the original liquid structure of water is completely destroyed (because of the so-called structure destroying effect of the compounds applied), the physical-chemical laws which otherwise determine the freezing point of an aqueous solution, for example the law of molecular freezing point depression, are not even approximately valid. Principally, those non-water components become overwhelming, for which the molar freezing point depressions exceed that of water. On the other hand, the competitive hydrolysis of formate and acetate ions prevents the development of a long-range order characteristic for a solid crystalline phase to such an extent which leads to extremely low freezing points significantly deviating from those expected on the basis of additivity and interpolation calculations, as it is demonstrated by numerical data.

Our other recognition was that the specific charge of alkali metal cations plays a significant role in depressing freezing point. For example, if sodium cation is used insted of potassium in the acetate-formate salt combination discussed, the low freezing points provided by potassium cation can not even be approached. The reason for this is that the sodium cation of higher specific charge (i.e. lower mass) establishes a greater field strength in its own environment, thus the water dipoles are oriented more effectively, resulting in a more limited heat motion. All this leads to a smaller decrease of freezing point, even at identical molar concentrations. Due to this reason, if the composition is intended to be established by sodium cations, their freezing point raising effect is to be compensated by organic compounds containing the above-mentioned hydrophilic substituents and/or by ethylene glycol. In this case the advantage of not using glycol at all is lost, and cooling fluid of reduced glycol content only can be involved. This means that (in the case of example 1 to be described later) for achieving an identical drop in freezing point, 80 % less glycol is necessary calculated for the same volume of the fluid than for the conventional (purely glycol-based) compositions. According to one embodiment of the invention this 80% glycol portion is replaced by materials not detrimental to the environment. If, however, the acetate-formate salt combination is established by potassium cation, the glycol can be fully eliminated, it can be replaced by compounds which are harmless to the environment and would not be hazardous to health, frost resistance and fluidity is also increased compared with the glycol-based cooling fluid of identical water content as shown by example 2 to be described later.

Those potassium acetate-formate compositions are advantageous from the aspect of decreasing the freezing point, wherein the mass ratio of the two anions is adjusted that the quantity (mass) of acetate in the fluid should be approximately six times of that of the formate. By increasing the relative concentration of the more expensive and due to corrosive characteristics also more disadvantageous formate ions, the freezing point depression already achieved can not be practically improved, but if a more moderate frost resistance is also sufficient in a geographic area of specified climate, the concentration of the formate additive can be reduced.

On the other hand, it should be taken into consideration that in the cooling systems of internal combustion engines, the fluid may induce the simultaneous corrosion of several structural materials being in metallic contact, i.e. the possibility of coupled metal corrosion (the so-called contact corrosion) prevails in a multiplied way. Due to this reason, the protection of the cooling system should be ensured by the addition of effective inhibitors. Although the elaboration of a new inhibitor composition was not the subject of this invention, we shall later specify the well-known inhibitors already applied for other purposes, which - according to our experimental results - provide appropriate protection even in the given case.

It is an object of this invention to provide a frost-resistant cooling fluid composition, which includes water, potassium acetate and potassium formate as main components, significantly shifting the acetate-formate ratio to the advantage of acetate, or optionally, in the case of a moderate frost resistance requirement, entirely omitting the formate additive, while in the case where a higher frost resistance demanded the formate concentration may reach the 25 % of the acetate concentration, in the case of extremely high frost resistance requirement, the water content in the mixture can be reduced down to 30 per cent by mass in the mixture, while in the case of a more moderate frost resistance requirement, the water content can be increased (e.g. by the dilution of concentrate). Concerning this fact it can be mentioned as a guidance that in the case of 1:6 formate-acetate anion concentration ratio, by increasing the water content up to 65 %, the freezing point is -25 °C and with the above-mentioned 30 % water content it is below -80 °C. It is difficult to determine and specify the freezing point at the latter solution, because the fluid is viscous in this concentration range, and it changes gradually to a state resembling a glass-type consistence. Therefore, no well-defined freezing point can be determined experimentally.

A further object of this invention is to provide a composition which is suitable at more moderate frost resistence requirement, comprising sodium cations instead of potassium cations. In this case the application of other freezing point depressing components are also necessary, for example urea. In this variety of the fluid addition of ethylene glycol may also be taken into consideration. Using such fluid disadvantages of glycol are only partly eliminated. A frost resistance of about -30 °C can be achieved with the fluid if the acetate-formate anion concentrations are nearly the same and the mass of urea and glycol approaches or reaches that of the formate and acetate ions.

Both fluid varieties can be mixed in any ratio with a glycol-based cooling fluid, with the result that the well-known disadvantages of glycol are growing with the increasing glycol content of the mixture.

Fluid compositions according to the invention can be produced in several varieties on the basis of the principles and data described above. Nevertheless, the following non-limiting examples illustrate the compositions and properties of the fluids claimed.

## Example 1

### Frost resistant fluid with reduced glycol content

42.6 parts by weight of water, 14.9 parts by weight of sodium hydroxide, 10.6 parts by weight of urea, 11.0 parts by weight of glycol. 10.9 parts by weight of 98 % formic acid and 10.9 parts by weight of 99.5 % acetic acid have been mixed, and to this mixture, for each litre 5 g of Na benzoate and 1 g of benzotriazole inhibitor has been added. The characteristics of the fluid so produced are as follows: pH: 7.2, density at 20 °C: 1.210 g/cm$^3$, boiling point: 111 °C, viscosity at 20 °C: 5.9 cSt, at 99 °C: 1.2 cSt, specific heat at 25 °C: 3.9 J/°C.cm$^3$ or 3.2 J/°C.g. The solidification point of the fluid is -35 °C, with starting turbidity at -28 °C. The fluid freezes without dilatation.

## Example 2

### Glycol-free environment-friendly frost resistant fluid

407 g of potassium hydroxide, 56.2 ml of 98 % formic acid, 353.4 ml of 99.5 % acetic acid and 807 ml of water have been mixed, and the inhibitor additive described in example 1 has been given to the fluid.

4

The fluid so obtained has the following characteristics: pH 9.3, freezing point -45 °C, boiling point 110 °C, viscosity at 22 °C: 2.3 cSt., density at 20 °C: 1.19 g/cm$^3$, specific heat in the 20 to 25 °C range: 3.27 J/°C.cm$^3$ or 2.75 J/°C.g. The fluid freezes without dilatation.

## Example 3

### Frost resistant fluid mixtures of different glycol content

According to the invention the conventional glycol-based and the glycol-free frost resistant fluids can be mixed and used in combination. It has been clarified experimentally that the two fluids can be mixed in any ratio, and the properties of the liquids produced in this way have also been determined as a function of mixing proportion.

It has been determined that the characteristics change monotonously although not linearly with the composition. These conditions are reflected by the freezing point data of the various mixtures of glycol-based cooling fluid with the trade name "Prevent" (in which the glycol content is nearly 50 per cent by volume) and the fluid specified in example 2, according to the following table.

| Fluid according to example 2 per cent by volume | Prevent per cent by volume | Freezing point °C |
|---|---|---|
| 100 | 0 | -45 |
| 75 | 25 | -43 |
| 50 | 50 | -42 |
| 25 | 75 | -35 |
| 0 | 100 | -33 |

It can be seen that even if interpolation is not possible, the characteristics assume intermediate values which change monotonously with the ratio. The same applies to the viscosity data. It is also to be mentioned that the viscosity of the fluid according to example 2 is lower at all temperature than that of the glycol-based frost resistant fluid and it can be pumped even at a temperature below -30 °C, i.e. it is fluidic in the complete range of fluid state. It is also important that at any composition the fluid mixture freezes without dilatation.

Any variety of the fluid compositions according to the invention (characterized by the described examples) may also be produced obviously using the formate and acetate salts as starting materials prepared separately by mixing the appropriate acid and alkali or obtained from commercial sources. The process according to the examples is considered to be more advantageous because generally the acid and alkali are the available or the more easily accessible basic materials.

Consequently, the advantage of our invented cooling fluids demonstrated quantitatively in the examples, is that the disadvantages resulting from the use of glycol in the conventional glycol-water cooling fluid could be partly eliminated in certain varieties and fully in other ones, without impairing the well-known advantages of the conventional fluids. In fact applying the glycol-free varieties frost resistence and fluidity improves significantly compared with the conventional fluids, thereby the temperature range of application broadens.

A further advantage has been achieved by the glycol-free varieties since the components applied are not capable of polymerization or acidic decomposition. Using the fluids invented the period of utilization is longer and thus also the operational safety is increased.

## Claims

1. Partly or fully glycol-free multi-component frost resistant cooling fluid, comprising 3 to 6 parts by weight of water, 0.5 to 1.5 parts by weight of urea, at most 1.5 parts by weight of glycol, 1 to 2 parts by weight of sodium formate, and 1 to 2 parts by weight of sodium acetate as main components.

2. Glycol-free multi-component frost resistant cooling fluid comprising 4 to 7 parts by weight of potassium acetate, 0.66 to 1.5 parts by weight of potassium formate and 3 to 9 parts by weight of water as main components.

3. Cooling fluids according to claims 1 and 2, comprising also 0.1 to 1.0 % by weight of an anti-corrosion inhibitor, preferably benzoic acid and/or sodium benzoate and/or potassium benzoate and/or benzotriazole.

**4.** Cooling fluids according to any of the claims 1, 2 and 3, characterized in that fluids according to claim 1, 2 or 3 are mixed in any ratio with any of the common glycol-based cooling fluid.

**Revendications**

**1.** Fluide de refroidissement à plusieurs composants, partiellement ou totalement exempt de glycol et résistant au gel, comprenant comme principaux composants, de 3 à 6 parties en poids d'eau, de 0,5 à 1,5 parties en poids d'urée, au maximum 1,5 parties en poids de glycol, de 1 à 2 parties en poids de formiate de sodium, et de 1 à 2 parties en poids d'acétate de sodium.

**2.** Fluide de refroidissement à plusieurs composants résistant au gel, comprenant comme principaux composants, de 4 à 7 parties en poids d'acétate de potassium, 0,66 à 1,5 parties en poids de formate de potassium, et de 3 à 9 parties en poids d'eau.

**3.** Fluides de refroidissement selon les revendications 1 à 2, comprenant également de 0,1 à 1,0 % en poids d'un inhibiteur de corrosion, de préférence de l'acide benzoîque et / ou du benzoate de sodium et / ou du benzoate de potassium et / ou du benzotriazole.

**4.** Fluides de refroidissement selon l'une quelconque des revendications 1, 2 et 3, caractérisés en ce que les fluides selon la revendication 1, 2 ou 3, sont mélangés selon un rapport quelconque avec n'importe quel fluide de refroidissement classique à base de glycol.

**Patentansprüche**

**1.** Teilweise oder vollständig glykolfreie, frostbeständige Mehrkomponenten-Kühlflüssigkeit, umfassend 3 bis 6 Gew.-Teile Wasser, 0,5 bis 1,5 Gew.-Teile Harnstoff, bis zu 1,5 Gew.-Teile Glykol, 1 bis 2 Gew.-Teile Natriumformiat und 1 bis 2 Gew.-Teile Natriumacetat als Hauptkomponenten.

**2.** Glykolfreie, frostbeständige Mehrkomponenten-Kühlflüssigkeit, umfassend 4 bis 7 Gew.-Teile Kaliumacetat, 0,66 bis 1,5 Gew.-Teile Kaliumformiat und 3 bis 9 Gew.-Teile Wasser als Hauptkomponenten.

**3.** Kühlflüssigkeiten gemäss Ansprüchen 1 und 2, umfassend zusätzlich 0,1 bis 1,0 Gew.% eines Antikorrosionsinhibitors, vorzugsweise Benzoesäure und/oder Natriumbenzoat und/oder Kaliumbenzoat und/oder Benzotriazol.

**4.** Kühlflüssigkeiten gemäss einem der Ansprüche 1, 2 und 3, dadurch **gekennzeichnet,** dass die Flüssigkeiten gemäss Ansprüchen 1, 2 oder 3 in irgendeinem Verhältnis mit irgendeiner üblichen, auf Glykol aufgebauten Kühlflüssigkeit vermischt sind.

6